# EUROPÄISCHE PATENTSCHRIFT

(11) **EP 2 375 560 B1**
(45) Veröffentlichungstag und Bekanntmachung des Hinweises auf die Patenterteilung: **04.09.2019**
(21) Anmeldenummer: 11161178.6
(22) Anmeldetag: 05.04.2011
(51) Int. Cl.: H02P 8/00, H02P 21/00

(54) **Antriebsvorrichtung zur Verwendung in einer Laborvorrichtung**
Drive device for use in a laboratory device
Dispositif d'entraînement pour l'utilisation dans un dispositif de laboratoire

(30) Priorität: 06.04.2010 CH 4972010
(43) Veröffentlichungstag der Anmeldung: 12.10.2011
(73) Patentinhaber: Tecan Trading AG, 8708 Männedorf (CH)
(72) Erfinder: Kälin, Remo, 8645, Jona (CH)
(74) Vertreter: OK pat AG

(56) Entgegenhaltungen:
- US-A- 4 223 558
- US-A- 4 821 586
- US-A- 5 378 975
- US-A- 5 990 651
- US-A1- 2003 137 272

## Beschreibung

Die Erfindung betrifft ein Verfahren zum Ansteuern eines in einer Antriebsvorrichtung umfassten Motors in einem Dilutor. Beschrieben werden Antriebsvorrichtungen für flüssigkeits-handhabende Laborvorrichtungen, wie z.B. Dilutoren und andere Liquid Handling Geräte.

### Hintergrund der Erfindung

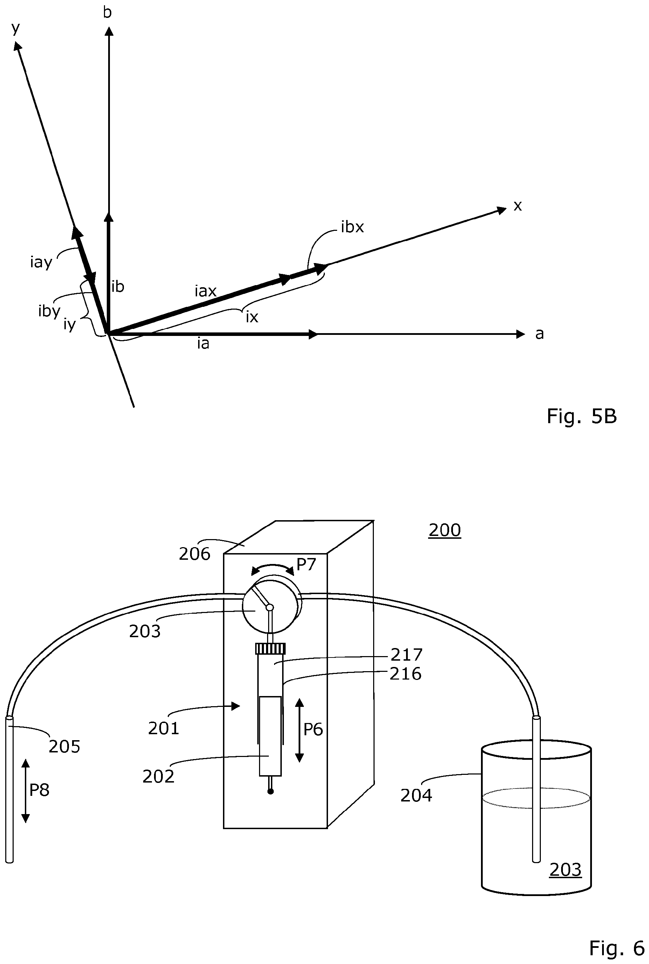

Im Laborbereich kommen häufig sogenannte Dilutoren zum Einsatz, sobald Flüssigkeitsmengen präzise dispensiert werden müssen. Dilutoren umfassen häufig motorbetriebene Spritzenpumpen, bei denen ein Aktor einen Kolben einer Spritze präzise auf und ab bewegt. Ein beispielhafter Dilutor ist in Fig. 6 gezeigt. Auf der Spritze kann z.B. ein Dreiwegeventil sitzen, das ebenfalls motorisch umgeschaltet wird. Das Ventil wird vorzugsweise so gedreht, dass ein Spritzenraum und ein Vorratsgefäss mit einem Reagens oder Verdünnungsmedium (z.B. einem Lösemittel, Puffer oder ähnlichem) fluidisch verbunden werden. Beim Hinunterziehen oder -bewegen des Kolbens wird die Spritze mit Verdünnungsmedium befüllt. Danach wird das Ventil gedreht, damit der Spritzenraum mit einer Dispenserspitze fluidisch verbunden ist. Mit dem motorischen Hochfahren des Kolbens wird Verdünnungsmedium über die Dispenserspitze abgegeben. Ist der Kolben ganz oben angelangt und die Spritze somit leer, kann das Ventil wieder in Richtung Vorratsgefäss gedreht und die Spritze erneut befüllt werden.

In automatisierten Pipettierrobotern, so genannten Liquid Handling Geräten, kommen bis zu 16 Dilutoren zum Einsatz, wie zum Beispiel Freedom EVO® (Tecan Schweiz AG, 8708 Männedorf, Schweiz) oder Biomek® FX (Beckman Coulter, Inc., Fullerton, Kalifornien). In Liquid Handling Geräten werden die Dilutoren eingesetzt, um über eine Leitung, die zu einer Pipettenspitze führt, einen Unter- oder Überdruck zu erzeugen. Die Spritze und die Leitung sind mit Systemflüssigkeit befüllt. Meist wird deionisiertes Wasser als Systemflüssigkeit verwendet. Ist die Pipettenspitze in eine Probenflüssigkeit eingetaucht und wird mittels Bewegung des Spritzenkolbens an der Pipettenspitze ein Unterdruck erzeugt, so wird eine Flüssigkeitsprobe in die Spitze eingesaugt. Wenn über den Spritzenkolben an der Pipettenspitze ein Überdruck erzeugt wird, dann wird die zuvor aufgenommene Flüssigkeitsprobe wieder abgegeben. Die in den Liquid Handling Geräten eingesetzten Dilutoren besitzen jeweils typischerweise ein Dreiwegeventil. Es können aber auch andere Ventile eingesetzt werden. Mit Hilfe des Ventils kann über die Spritzen aus einem Vorratsgefäss frische Systemflüssigkeit angesaugt werden, um die Leitung zwischen Dilutor und Pipettierspitze zu befüllen oder um die Leitung zu spülen und die Pipettenspitzen mit Systemflüssigkeit innen zu reinigen.

Beim automatischen Pipettieren wird eine Probe vorzugsweise ohne Kontakt mit dem Zielgefäss aus der Luft abgegeben. Damit wird das Risiko einer Probenverschleppung minimiert. Zudem können die Proben aus der Luft rascher abgegeben werden als im Kontakt mit dem Zielgefäss oder mit einer sich im Zielgefäss bereits befindenden Flüssigkeit. Bei der Abgabe kleiner Volumina aus der Luft ist es sehr wichtig, dass die Probe mit hoher Geschwindigkeit und am Schluss mit einem scharfen Stopp abgegeben wird, um so eine grosse negative Beschleunigung zu erzielen. Ansonsten findet kein sauberer Tropfenabriss an der Pipettenspitze statt. Um diese Geschwindigkeiten mit dem scharfen Endstopp an der Pipettenspitze gewährleisten zu können, ist es wichtig, dass die Bewegung des Spritzenkolbens möglichst präzise und mit hoher Dynamik erzeugt, und sehr direkt an die Pipettenspitze übertragen wird.

Wasser, vorzugsweise de-ionisiertes Wasser, in Pipettenspitze, Leitung und Spritze dient in den Liquid Handling Geräten als starrer Bewegungsvermittler der Bewegung des Spritzenkolbens zur Pipettenspitze. Das deionisierte Wasser gilt als inkompressible Flüssigkeit und ist deshalb als Bewegungsvermittler sehr gut geeignet. Falls in der Systemflüssigkeit jedoch Gasblasen auftreten, z.B. durch das Ausgasen von Luft, wirkt jede Gasblase als kleine Feder. Gasblasen können sich aufgrund erhöhter Temperaturen eines Motors in einem Dilutor bilden. Durch solche Gasblasen wird die Bewegungsvermittlung vom Spritzenkolben zur Pipettenspitze gedämpft. Mechanische Hysterese-Effekte in der Dilutormechanik können das System ebenfalls beeinflussen. Diese Dämpfungen wirken sich nachteilig auf die Pipettiergenauigkeit und Richtigkeit der abgegeben Volumina aus.

In einem Liquid Handling Gerät kommen Motoren, vorzugsweise Schrittmotoren mit entsprechenden Motorsteuerungen zum Einsatz. Es hat sich gezeigt, dass bei der konventionellen Ansteuerung eines gebräuchlichen 2-phasig wechselstrombetriebenen Schrittmotors hohe Halteströme auftreten. Diese Halteströme führen dazu, dass sich der ganze Dilutor erwärmt. Es wurden an freistehenden Dilutoren Temperaturen von über 50° C gemessen. Wenn mehrere solche Dilutoren nebeneinander in einem Liquid Handling Gerät eingebaut sind, können sogar noch höhere Temperaturen auftreten, weil die Wärme nur schlecht abgeführt werden kann. Über das Dilutorgehäuse erwärmen sich auch die Spritzen, die Ventile und zum Teil die Leitungen. Dadurch wird die Systemflüssigkeit erwärmt, was zum Ausgasen von Luft und damit zu der bereits erwähnten unerwünschter Blasenbildung führt.

Ausserdem kann diese Erwärmung des Motors und der umliegenden Komponenten eine Reduktion der Lebensdauer (vor allen der Elektronik und der Kunststoffteile) des Liquid Handling Geräts zur Folge haben, was unerwünscht ist. Die Druckschriften US 2003/0137272 A1 und US 5,378,975 beschreiben eine Motorsteuerung zum Ansteuern eines Schrittmotors. Druckschrift US 4,223,558 offenbart einen Dilutor mit Pumpen, deren Kolben durch Schrittmotoren bewegt werden können.

Es stellt sich daher die Aufgabe, Dilutoren bereit zu stellen, die minimale Abwärme erzeugen, das System nicht unnötig erwärmen und somit keine Blasenbildung in der Systemflüssigkeit zeigen. Es stellt sich auch die Aufgabe, andere Laborvorrichtungen und insbesondere Liquid Handling Geräte zu optimieren. Zu diesem Zweck soll eine besonders geeignete Antriebsvorrichtung bereit gestellt werden. Ausserdem soll ein entsprechendes Verfahren zum Ansteuern eines Motors vorgeschlagen werden.

Diese Aufgaben werden erfindungsgemäß gelöst durch den Gegenstand der Ansprüche 1 und 2.

Ausgehend von den Erkenntnissen in Bezug auf die Ursache für die erwähnten Temperaturprobleme und die Blasenbildung in der Systemflüssigkeit bei Dilutoren und Liquid Handling Geräten, wird eine neuartige Antriebsvorrichtung zur Verwendung in einem Dilutor, einem Liquid Handling Gerät oder einer anderen Laborvorrichtung vorgeschlagen.

Eine beispielhafte Antriebsvorrichtung umfasst einen wechselstrombetriebenen Motor, vorzugsweise einen 2-phasig wechselstrombetriebenen Schrittmotor, mit Rotor und Stator, und eine Motorsteuerung, die dazu ausgelegt ist den Motor dynamisch in Bezug auf Geschwindigkeit und/oder Beschleunigung anzusteuern. Die Antriebsvorrichtung umfasst Mittel (z.B. einen motorseitigen Encoder), die im Betrieb jeweils ein aktuelles Signal liefern, das die aktuelle Position des Rotors im Motor gegenüber dem Stator respektive den Polen wiedergibt. Ausserdem sind Phasenanschlüsse z.B. in Form von Shuntwiderständen vorgesehen, um motorseitig die aktuell fliessenden Motor-Phasenströme abgreifen zu können. Die Motorsteuerung umfasst ein Transformationsmodul, um die aktuell fliessenden Motor-Phasenströme mittels eines Transformationsverfahrens in einen Schlupfanteil und einen Drehmomentanteil zu zerlegen. Sie umfasst weiterhin ein Schlupfregelmodul, dem als Eingangsgrössen der Schlupfanteil und ein erster Sollwert (z.B. ein Nullwert) zur Verfügung gestellt werden, sowie ein Drehmomentregelmodul, dem als Eingangsgrössen der Drehmomentanteil und ein zweiter Sollwert zur Verfügung gestellt werden. Das Schlupfregelmodul und das Drehmomentregelmodul regeln die Rotor-Phasenströme so, dass die Differenz zwischen dem Schlupfanteil und dem ersten Sollwert und die Differenz zwischen dem Drehmomentanteil und dem zweiten Sollwert jederzeit minimal sind.

Eine solche Anordnung und Beschaltung hat den Vorteil, dass der Motor, der zum Einsatz kommt, immer im optimalen Bereich (d.h. grosser Wirkungsgrad und geringer Stromverbrauch) betrieben wird. Dadurch verbessert sich die Regelbarkeit des Motors deutlich und die Dynamik des Motors wird erhöht. Unter Dynamik wird vor allem die Fähigkeit zum raschen Beschleunigen und Abbremsen verstanden. Das scharfe Abbremsen ist für das kontaktlose Dispensieren aus der Luft sehr wichtig, wie eingangs erläutert.

Ausserdem kommt es bei der Handhabung von Flüssigkeiten und Proben in Laborvorrichtungen darauf an, stets zu wissen, wo genau der Rotor des Motors steht. Die Erfindung ermöglicht eine sehr genaue Kontrolle der Rotorposition. Weiterhin ist für die genannten Vorrichtungen und Geräte wichtig zu wissen, an welcher Position die mechanischen Elemente (zum Beispiel der Pumpenkolben) genau stehen. Auch dies kann mit der Antriebsvorrichtung erreicht werden. Zusätzlich spielt auch die hohe Dynamik für das Pipettierergebnis eine Rolle, wie erwähnt. Zu diesem Zweck ist ein möglichst starres, ungedämpftes System wichtig, das keine Federwirkung zeigt. Auch in diesem Sinne bietet die Antriebsvorrichtung Vorteile gegenüber herkömmlichen Vorrichtungen.

Vor allem wird im Stillstand nur Strom in den Motor der Antriebsvorrichtung gespeist, wenn eine Kraft erfordert wird. Daher fliessen in einem statischen Fall keine oder sehr niedrige Halteströme und es bildet sich kaum Wärme am Motor. Dadurch wird ein Erwärmen der Systemflüssigkeit und damit das Ausgasen von Luft vermieden. Deshalb eignet sich die Antriebsvorrichtung besonders als Antriebsvorrichtung für eine Pumpe in einer Laborvorrichtung und speziell für eine Pumpe in einem Dilutor oder einer andere Laborvorrichtung.

Es wird als ein weiterer Vorteil der Erfindung angesehen, dass durch die intelligente, bedarfsabhängige Speisung des Motors der Stromverbrauch geringer ist als bei bisherigen Geräten oder Laborvorrichtungen. Der reduzierte Stromverbrauch hat einen Einfluss auf die Ökologie des Geräts oder der Laborvorrichtung. Ausserdem können aufgrund des geringen Stromverbrauchs Anwendungen realisiert werden, die mit bisherigen Ansätzen nicht möglich war. Die Erfindung lässt sich zum Beispiel in tragbaren Anwendungen, z.B. für die Umweltanalytik oder andere Feldanwendungen, einsetzen, die aus Batterien oder aus regenerativen Stromquellen gespeist werden.

Bei den Motoren, die hier eingesetzt werden, handelt es sich um Synchronmotoren, die dem von außen angelegten Feld folgen. Sie können daher ohne Sensoren zur Positionsrückmeldung (Encoder oder Drehgeber) betrieben werden. Es kann trotzdem ein motorseitiger Encoder vorgesehen sein, um eine gute Positionsgenauigkeit zu erzielen, das Initialisierungsverfahren abzukürzen, und um vor allem die Ansteuerung des Motors mit den beschriebenen Vorteilen zu vereinfachen. Bei anderen Ausführungsformen, die ohne Encoder auskommen, wird ein Motor kurzzeitig im Generatorbetrieb betrieben, um auf diese Weise von zyklisch (z.B. jeden zweiten Stromregelzyklus) Information über die Rotorposition zu erhalten.

Die Erfindung hat den Vorteil, dass kein Lineargeber oder anderer Decoder notwendig ist, um eine Linearbewegung eines mechanischen Bauteils (z.B. eines Pumpenkolbens, -stössels, einer Drehspindel oder eines anderen mechanisch bewegbaren Elements) zu ermitteln. Die genaue Position wird gemäss Erfindung vorzugsweise durch ein Zusammenwirken eines motorseitigen Winkelencoders und eines Positionsregelmoduls, oder durch ein Zusammenwirken eines kurzzeitig im Generatorbetrieb betriebenen Motors und eines Positionsregelmoduls bewerkstelligt.

Um eine Genauigkeit zu erreichen, die z.B. für das hochpräzise Dosieren in einem Dilutor geeignet ist, bei dem eine Motorsteuerung einen als Pumpenmotor dienenden (Schritt-) Motor ansteuert, kann ein Encoder eingesetzt werden, der eine Winkelauflösung grösser 1024 Linien pro Umdrehungen hat.

Je nach Ausführungsform und Anforderungsprofil kann ein zusätzlicher Encoder auf die bewegliche Mechanik aufgesetzt werden, um z.B. auch die mechanische Hysterese ausgleichen zu können

Der Einsatz von Lineargebern erübrigt sich, da der motorseitige Encoder oder der Motor im Generatorbetrieb, mit oder ohne zusätzlichem Encoder an der Mechanik, genaue Positionsangaben ermöglicht. Damit lässt sich eine Antriebsvorrichtung einfach in verschiedenste Laborvorrichtungen integrieren.

Eine Ansteuerung des Motors weist typischerweise einen Prozessor auf, der mit dem Motor in Wechselwirkung steht. Es muss lediglich ein Steueranschluss, zum Beispiel über einen Signalbus (z.B. RS-232, RS-485, oder CAN) und ein mechanischer Anschluss der Welle oder Achse des (Schritt-)Motors mit dem zu bewegenden mechanischen Element der Laborvorrichtung hergestellt werden, um das System (z.B. einen Prozessor) ansprechen oder ansteuern zu können.

Es ist ein weiterer Vorteil der Erfindung, dass der (Schritt-)Motor effizienter betrieben wird als bei herkömmlichen Antriebsvorrichtungen für Laborvorrichtungen.

Der (Schritt-)Motor hat eine deutlich längerer Laufzeit (im Sinne von Standzeit oder Nutzungsdauer), da er stets im optimalen Betriebspunkt mit lastabhängigem Strom betrieben wird.

Durch die erhöhte Dynamik des (Schritt-)Motors mit beschriebener Ansteuerung wird es möglich, kleinere Volumina direkt aus der Luft zu dispensieren. Mit konventionell angesteuerten Motoren ausgerüstete Liquid Handling Geräte können bis zu ca. 3 µl kontaktfrei aus der Luft abgeben (Dilutor mit 1000 µl Spritze, Pipettenauslass 0.8 mm und scharfem Stopp), ohne dass zusätzliche Einrichtungen benötigt werden, die der Flüssigkeitsprobe durch einen Impuls den Tropfenabriss ermöglichen (siehe auch Patentanmeldung EP 876 219 des Anmelders der vorliegenden Anmeldung). Mit der beschriebenen Ansteuerung ist die kontaktfreie Abgabe aus der Luft von Volumina bis zu 1 µl ohne zusätzliche Einrichtungen möglich. Die Dynamik des (Schritt-)Motors erlaubt viel steilere Abbremsrampen als eine konventionelle Steuerung bei identischer Hardware.

Durch die genaue Motorenregelung lässt sich die Präzision und Wiederholgenauigkeit der Flüssigkeitsabgabe deutlich steigern.

Bei einer konventionellen Ansteuerung können in bestimmten Geschwindigkeitsbereichen äusserst störende Geräusche, wie z.B. ein Rattern beim Überstreichen der Pole, auftreten, die im Laboralltag nicht tolerierbar sind. Mit der erfindungsgemässen Ansteuerung können diese störenden Geräusche einfach vermieden oder ausgeblendet werden.

Weitere Vorteile ergeben sich aus der detaillierten Beschreibung.

Das erfindungsgemäße Verfahren wird nun an Hand von schematischen, den Umfang der Erfindung nicht beschränkenden Zeichnungen von beispielhaften Ausführungsformen im Detail erläutert.
- Fig. 1A: zeigt eine schematische Blockansicht einer ersten Antriebsvorrichtung eines Laborgeräts;
- Fig. 1B: zeigt eine schematische Blockansicht einer zweiten Antriebsvorrichtung eines Laborgeräts;
- Fig. 2: zeigt eine schematische Blockansicht einer weiteren Antriebsvorrichtung eines Laborgeräts;
- Fig. 3: zeigt Details einer schematischen Blockansicht einer weiteren Antriebsvorrichtung eines Laborgeräts;
- Fig. 4: zeigt eine schematische Perspektivansicht einer Antriebsvorrichtung eines Laborgeräts;
- Fig. 5A: zeigt eine schematische Ansicht eines ersten Schritts der Koordinatentransformation;
- Fig. 5B: zeigt eine schematische Ansicht eines zweiten Schritts der Koordinatentransformation;
- Fig. 6: zeigt eine schematische Perspektivansicht eines Pipettierautomaten mit einem Dilutor;
- Fig. 7: zeigt eine schematische Seitenansicht eines ersten Dilutors;
- Fig. 8: zeigt eine schematische Seitenansicht eines zweiten Dilutors;
- Fig. 9: zeigt eine schematische Seitenansicht eines dritten Dilutors;
- Fig. 10: zeigt eine schematische Seitenansicht eines vierten Dilutors.

Im Folgenden werden vorteilhafte Ausführungsformen der Erfindung beschrieben, wobei es sich um beispielhafte Ausführungsformen handelt. Diese umfassen sowohl verschiedene Ausbildungen der Gesamterfindung, als auch Baugruppen und Einzelteile der Erfindung. Grundsätzlich lassen sich die beschriebenen Baugruppen und Einzelteile der verschiedenen Ausführungsformen miteinander kombinieren, respektive die Baugruppen und Einzelteile einzelner Ausführungsformen lassen sich durch die Baugruppen und Einzelteile anderer Ausführungsformen ersetzen. Die hierbei gebildeten Kombinationen können kleinere, jedem Fachmann geläufige und daher nicht weiter beschriebene Anpassungen bedingen, zum Beispiel um ein Zusammenwirken oder Ineinandergreifen der Baugruppen und Einzelteile zu ermöglichen.

Der Begriff Modul wird hier verwendet, um eine Funktionsgruppe zu umschreiben, die in Hardware, Software oder als Kombination aus Hard- und Software realisiert ist. Vorzugsweise umfassen diese Module einen oder mehrere Digitale Signal Prozessoren (DSP).

Die Motoren, die hier zum Einsatz kommen, werden mit dem Bezugszeichen 10 bezeichnet. Dort wo zwischen Motoren mit Encoder 11 und Motoren ohne Encoder 11 unterschieden wird, werden die ersteren mit 10.1 und die zweiten mit 10.2 bezeichnet. Die Motoren 10.1 und 10.2 müssen sich technisch jedoch nicht unterscheiden, sondern der Unterschied liegt primär in der Beschaltung und/oder Ansteuerung der Motoren 10.1, 10.2.

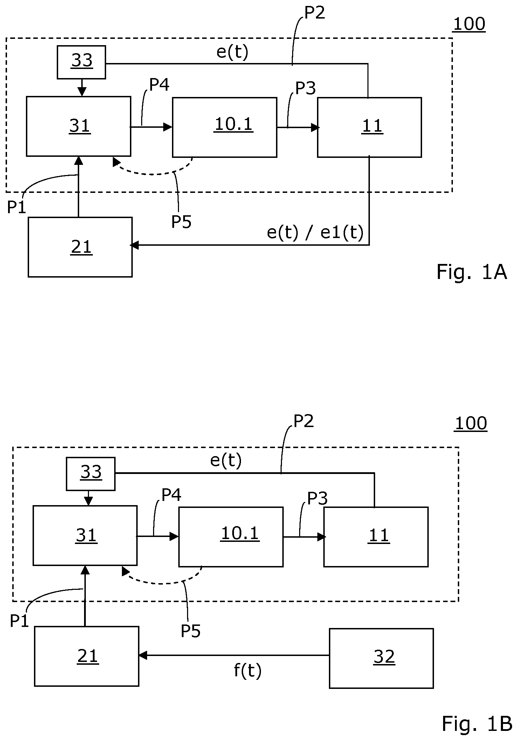

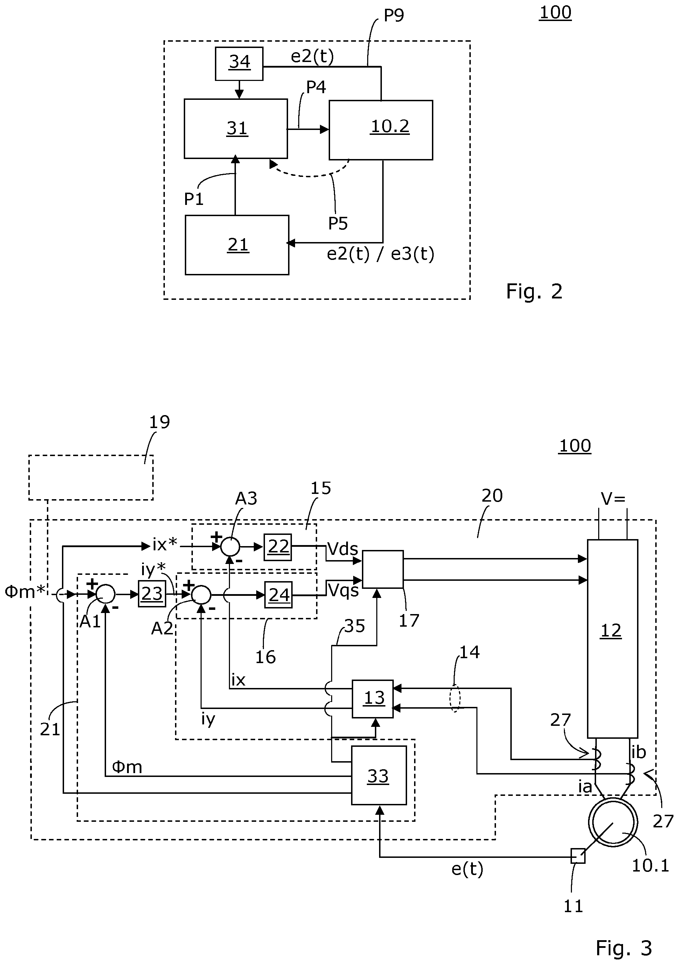

Zwei grundlegende Ausführungsformen mit Encoder sind in den Figuren 1A und 1B in schematischer Blockdarstellung gezeigt. Eine andere grundlegende Ausführungsform ohne Encoder (encoderlose Ausführungsform) ist in der Fig. 2 in schematischer Blockdarstellung gezeigt. Die Funktion der einzelnen Blöcke oder Module kann aber auch anders aufgeteilt oder zusammengefasst werden, als in den Figuren gezeigt.

Im Zusammenhang mit der vorliegenden Erfindung ist verschiedentlich von Schrittmotoren 10 die Rede. Bei dem Schrittmotor 10 handelt es sich um einen Synchronmotor 10, bei dem der Statorstrom von einem Satz Statorspulen zum nächsten Satz Statorspulen weitergeschaltet wird. Die entsprechende Kommutierung erfolgt bei der Antriebsvorrichtung 100 auf elektronischen Weg durch Einsatz einer Motorsteuerung 20 mit Kommutierungsmodul 31, wie in den Figuren 1A, 1B und 2 schematisch gezeigt. Die Kommutierung kann auch direkt durch einen PID-Regler und/oder andere Module erfolgen (diese Form der Kommutierung ist nicht in den Figuren gezeigt). Die magnetische Anziehung zwischen Rotor- und Statorzähnen und die kontinuierliche Kommutierung resultiert in einer Drehbewegung des Rotors.

Generell kann diese Ansteuerung bei jeder Art von Synchronmotoren 10 angewendet werden. Vorzugsweise kommen hier jedoch bei allen Ausführungsformen Schrittmotoren 10 zum Einsatz. Ganz besonders geeignet sind Schrittmotoren 10, die eine Schrittweite haben, die kleiner ist als 2 Grad und besonders vorzugsweise kleiner als 1 Grad. Je kleiner die Schrittweite ist, desto besser wird die Regelbarkeit.

Ein Schrittmotor 10 ist ein Motor, dessen Rotor genau dem von außen angelegten Stator-Feld folgt. Er kann daher auch ohne Sensoren zur Positionsrückmeldung (Encoder 11 oder Drehgeber) betrieben werden. Motoren 10.2, die kurzfristig in einen Generatorbetrieb betreibbar sind, um so eine Rückmeldung über die Rotorposition zu ermöglichen, können unter Ausnützung des Back-EMF Effektes auch ohne Sensoren zur Positionsrückmeldung (Encoder 11 oder Drehgeber) betrieben werden.

Bei einem Teil der Ausführungsformen kommt ein Motor 10.1 mit motorseitigem Encoder 11 zum Einsatz, wie in den Figuren 1A, 1B und 3 gezeigt. Dieser Encoder 11 sitzt direkt am oder neben dem Motor 10.1 und liefert ein Signal, hier ein Encodersignal e(t), an das Kommutierungsmodul 31 (hier über ein zwischengeschaltetes Modul zur Encodersignalverarbeitung 33). Ausserdem kann der Encoder 11 das Encodersignal e(t) oder ein Signal e1(t), das von dem Encodersignal e(t) abgeleitet oder aus diesem ermittelt wurde, auch an ein Positionsregelmodul 21 übergeben, wie in Fig. 1A zu erkennen ist. Alternativ wird, wie in Fig. 1B gezeigt, ein zusätzlicher (separater) Encoder 32 eingesetzt, der zum Beispiel an oder neben einem sich bewegenden mechanischen Element (z.B. einem mechanischen Element einer Pumpe) der Antriebsvorrichtung 100 sitzt. Dieser Encoder 32 liefert ein Encodersignal f(t) an das Positionsregelmodul 21. Es ist auch eine Kombination der beiden Ausführungsformen der Figuren 1A und 1B denkbar, bei der sowohl der Encoder 11 am Motor 10.1, als auch ein weiterer Encoder 32 Encodersignale e(t) oder e1(t) und f(t) an das Positionsregelmodul 21 senden.

Die Ansteuerung lässt sich aber auch ohne Encoder anwenden, indem man den sogenannten Back-EMF-Effekt (auch als elektromotorische Gegenkraft oder Counter-electromotive force bekannt) eines Motors 10.2 ausnutzt Die entsprechenden Ausführungsformen brauchen keinen motorseitigen Encoder 11, um eine Aussage über die Rotorposition zu ermöglichen, wie anhand des stark schematisierten Blockschaltbildes in Fig. 2 angedeutet. Ein Motor 10.2, dessen Back-EMF genutzt wird, wird so eingesetzt und durch ein Kommutierungsmodul 31 angesteuert, dass er hauptsächlich als Motor 10.2 arbeitet und elektrische Leistung aufnimmt, um diese Leistung in mechanische Bewegung (in Form einer Rotation) umzuwandeln. Kurzzeitig wird der Motor 10.2 aber als freilaufender Generator betrieben, der die Rotation des Motors 10.2 in eine Spannung/Strom (hier Generatorsignal e2(t) genannt) umsetzt. Die Ausführungsformen, die statt eines Motors 10.1 mit Encoder 11 einen encoderlosen Motor 10.2 einsetzen, nutzen den kurzzeitigen Generatorbetrieb des Motors 10.2, um eine Aussage über die Rotorposition zu ermöglichen. Die Spannung (hier Generatorsignal e2(t) genannt), die an den Motorwicklungen (am Rotor) abgegriffen wird, während der Motor 10.2 sich kurzzeitig im Generatorbetrieb weiter dreht, ist proportional zu der Winkelgeschwindigkeit des Rotors. Anhand des Spannungsverlaufs kann die Rotorposition gegenüber dem Stator ermittelt werden. Während des kurzzeitigen Generatorbetriebs dreht sich der Rotor des Motors 10.2 nahezu mit unveränderter Winkelgeschwindigkeit weiter. Während des Motorbetriebs steht kein aktuelles Signal e2(t) zur Verfügung. Das aktuelle Signal e2(t) wird nur während der kurzzeitigen Generatorbetriebs bereit gestellt, kann aber mit einem in Software modulierten Modell nachgeführt werden. Das Signal e2(t) oder ein Signal e3(t), das von dem Signal e2(t) abgeleitet oder aus diesem ermittelt wird, kann optional auch einem Positionsregelmodul 21 zugeführt werden. Es enthält die gleiche Information wie das Encodersignal

Das Positionsregelmodul 21 (siehe Fig. 1A, 1B, 2 und 3) wirkt auf das Kommutierungsmodul 31 ein, wie durch den Pfeil P1 gezeigt. Eine Verbindung P2 dient als Feedback zwischen dem Encoder 11 oder dem Motor 10.2 und dem Kommutierungsmodul 31. Bei der Ausführungsform nach Fig. 2 dient eine Verbindung P9 als Feedback. Das Abgreifen der Motorposition durch den motorseitigen Encoder 11 ist in den Figuren 1A, 1B und 3 durch den Pfeil P3 dargestellt. Das kommutierende Ansteuern des Motors 10.1 wird in den Figuren 1A, 1B und 2 durch den Pfeil P4 symbolisiert.

Neben dem erwähnten Encodersignalen e(t), e1(t) verarbeitet das Kommutierungsmodul 31 vorzugsweise auch Phasenströme, die am Motor 10.1 oder 10.2 gemessen oder über Phasenanschlüsse 27 abgegriffen werden, wie z.B. in Fig. 3 gezeigt.

Weitere Details zu dem Abgreifen der Phasenströme und zu einer Ausführungsform mit motorseitigem Encoder 11 sind der Fig. 3 zu entnehmen.

Eine genaue Positionierung wird bei einigen Ausführungsformen durch ein Zusammenwirken des motorseitigen Encoders 11 und des Positionsregelmoduls 21, respektive des zusätzlichen Encoders 32 und des Positionsregelmoduls 21 bewerkstelligt. Es ist auch möglich, wie erwähnt, zwei Encoder 11 und 32 gemeinsam mit dem Positionsregelmodul 21 zusammen wirken zu lassen.

Es kommen vorzugsweise bei allen Ausführungsformen 2-phasig wechselstrombetriebene Schrittmotoren 10 zum Einsatz, da diese Motoren 10 mit einer langsamen Drehzahl (z.B. kleiner als 400 U/min) betrieben werden können, da sie hohe Drehmomente erzeugen können, minimalen Verschleiss aufweisen und vor allem sehr kostengünstig sind.

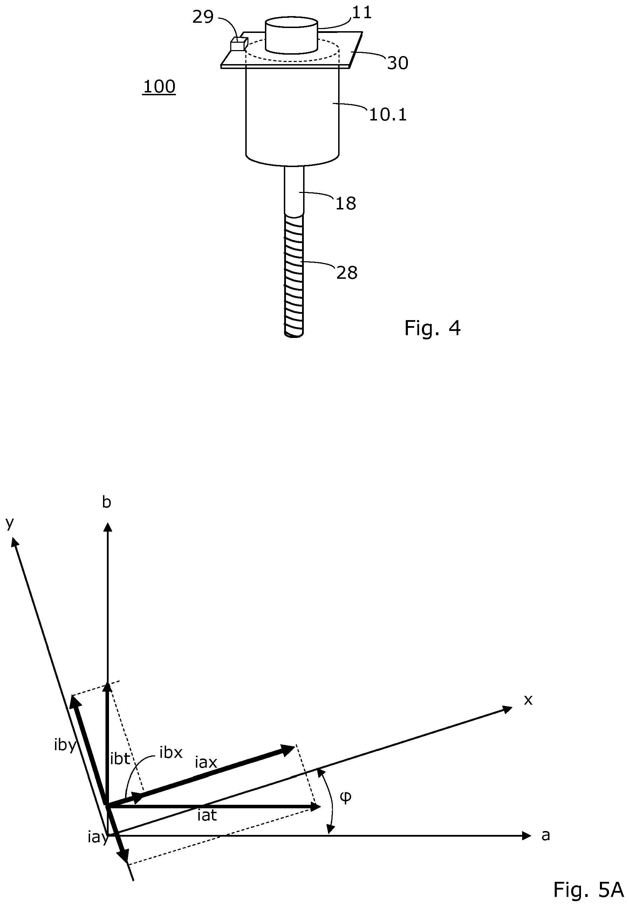

Der (Schritt-)Motor 10 umfasst, wie anhand eines schematischen Beispiels in Fig. 4 gezeigt, eine Welle (Achse) 18, die mit dem drehend gelagerten Rotor verbunden ist. Da der Schrittmotor 10 mit der Motorsteuerung 20 primär zum Einsatz in einem Dilutor 200 oder einer anderen flüssigkeitshandhabenden Laborvorrichtung (z.B. einem Liquid Handling Gerät) ausgelegt ist, ist ein mechanisches Element (z.B. ein Pumpenkolben 202, eine Kolbenstange, eine Drehspindel 28, ein Stössel, ein Zahnrad 208, eine verzahnte Rolle oder Rad 213) einer Pumpe mit der Welle 18 verbunden. Vorzugsweise umfassen solche Pumpen einen Zylinder 216 mit einem darin beweglichen Kolben 202, wie in den Figuren 6 bis 10 beispielhaft gezeigt. Die Achse oder Welle 18 des (Schritt-) Motors 10 ist zum Antreiben der Pumpe mechanisch mit einem beweglichen mechanischen Element derselben verbunden.

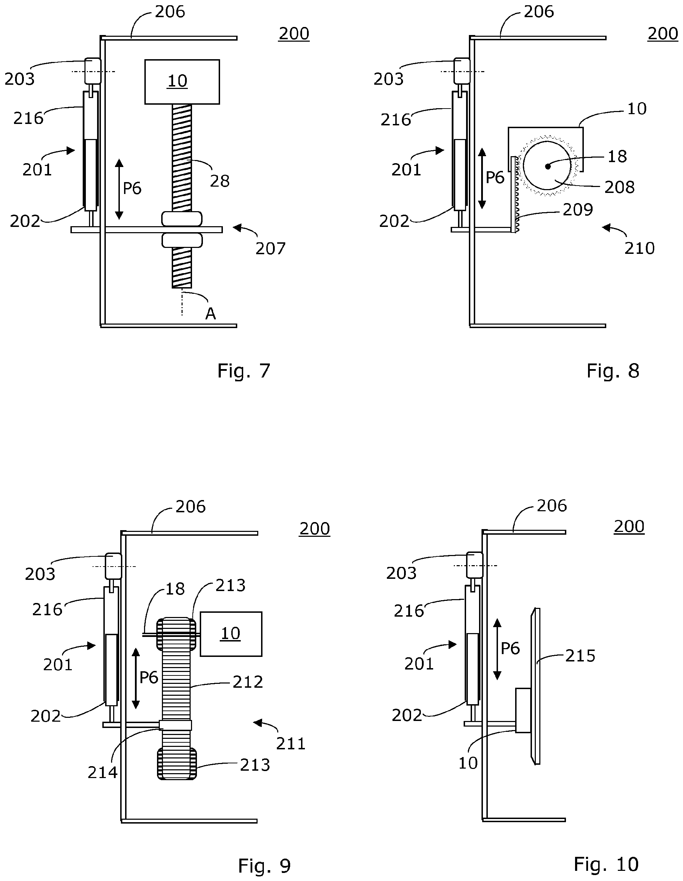

Die Erfindung kann auch im Zusammenhang mit Zahnradpumpen, Schraub-, Membran- oder Peristaltikpumpen eingesetzt werden. Weitere Details zum möglichen Pumpenanordnungen und -aufbauten sind den Figuren 7 bis 10 zu entnehmen.

Es werden die (Schritt-)Motoren 10 in einem geschlossenen Regelkreis (closed loop) betrieben, wie im Folgenden näher beschrieben wird. Dabei wird berücksichtigt, dass bei einem Motor 10.1 die Encoderinformation (z.B. das Signal e(t)), bzw. bei einem Motor 10.2 das Generatorsignal e2(t), und die gemessenen oder abgegriffenen Phasenströme für die Kommutierung des Motors 10.1 oder 10.2 verwendet werden. Diese Kommutierung erfolgt z.B. durch das Kommutierungsmodul 31.

Die Motorsteuerung 20 zur Kommutierung des Motors 10 umfasst mindestens einen PI oder PID-Regler. Ein PI-Regler ist ein Proportional-Integral-Regler und ein PID-Regler ist ein integrierender Proportional-Differenz-Regler. Die Regler 22, 23, 24, die gemäss Erfindung zum Einsatz kommen, arbeiten mit einer Differenz zwischen einem Istwert und einem Sollwert. Durch Regelung der Motorsteuerung 20 wird angestrebt, diese Differenz(en) zu minimieren oder ganz auf Null zu bringen.

Die Motorsteuerung 20 umfasst vorzugsweise drei PI-Regler oder PID-Regler 22, 23, 24, wie in Fig. 3 anhand einer speziellen Ausführungsform gezeigt. Diese PI-Regler oder PID-Regler 22, 23, 24 sind Elemente des entsprechenden Schlupfregelmoduls 15, des entsprechenden Positionsregelmoduls 21 und des entsprechenden Drehmomentregelmoduls 16.

Die Motorsteuerung 20 ist so ausgelegt, dass ein Drehfeld so mittels der Statorspulen vorgegeben wird, dass das Drehfeld mit optimalem Schlupf dem Rotor des (Schritt-)Motors 10 folgt. Kleine Abweichungen zum idealen Schlupf werden sofort durch das Schlupfregelmodul 15 und das Drehmomentregelmodul 16, die zusammen für die Kommutierung zuständig sind, ausgeregelt.

Weitere Details einer Ausführungsform der Vorrichtung 100, die speziell zur Verwendung in einer Laborvorrichtung ausgelegt ist, sind in der bereits erwähnten Fig. 3 dargestellt. Die Vorrichtung 100 umfasst hier einen 2-phasig wechselstrombetriebenen Schrittmotor 10.1 mit Rotor und Stator, sowie eine Motorsteuerung 20, die dazu ausgelegt ist den Schrittmotor 10 effizient anzusteuern. Die Vorrichtung 100 umfasst weiterhin einen motorseitigen Encoder 11, der jeweils ein aktuelles Encodersignal e(t) liefert, das die aktuelle Rotorposition des Rotors des Motors 10.1 wiedergibt. Ausserdem sind Phasenanschlüsse 27 und Leitungen 14 vorgesehen, um motorseitig die aktuell fliessenden Motor-Phasenströme ia, ib abgreifen zu können.

Die Motorsteuerung 20 zeichnet sich bei allen Ausführungsformen dadurch aus, dass sie ein Transformationsmodul 13 umfasst, um die aktuell fliessenden Motor-Phasenströme ia, ib mittels eines Transformationsverfahrens in einen Schlupfanteil ix und einen Drehmomentanteil iy zu zerlegen. Vorzugsweise kommt eine Matrix-Transformation als Transformationsverfahren zum Einsatz. Durch die Transformation werden die Stromwerte eines ersten a-b-Koordinatensystems auf ein zweites x-y-Koordinatensystem abgebildet. Es kommt ein Schlupfregelmodul 15 zum Einsatz, dem als Eingangsgrössen der Schlupfanteil ix und ein sogenannter erster Sollwert ix* als Referenzwert zur Verfügung gestellt werden. Die Motorsteuerung 20 umfasst weiterhin ein Drehmomentregelmodul 16, dem als Eingangsgrössen der Drehmomentanteil iy und ein zweiter Sollwert iy* als Referenzwert zur Verfügung gestellt werden. Das Schlupfregelmodul 15 und das Drehmomentregelmodul 16 stellen die Motor-Phasenströme ia, ib so ein, dass die Differenz zwischen dem Schlupfanteil ix und dem ersten Sollwert ix* und die Differenz zwischen dem Drehmomentanteil iy und dem zweiten Sollwert iy* jederzeit minimal oder gleich Null sind. Es kommt hier weiterhin ein Modul 33 (Modul zur Encodersignalverarbeitung) zum Einsatz, das die elektrischen Signale des Encoders 11 (im konkreten Fall 1024 Linien, bzw. 4096 Inkremente pro Umdrehung) in einen Winkel Φm umwandelt.

In Fig. 3 sind Additionsglieder A1, A2, A3 durch Kreise dargestellt und das jeweils zur Anwendung kommende Vorzeichen ist durch ein Plus- oder Minuszeichen direkt neben diesen Additionsgliedern A1, A2, A3 angegeben. Das Additionsglied A1 subtrahiert die Istposition Φm von der Sollposition Φm*, d.h. es wird die Differenz zwischen der Sollposition Φm* und der Istposition Φm betrachtet. Das Additionsglied A2 subtrahiert den Drehmomentanteil iy von dem zweiten Sollwert iy*, d.h. es wird die Differenz zwischen dem zweiten Sollwert iy* und dem Drehmomentanteil iy betrachtet. Das Additionsglied A3 subtrahiert den Schlupfanteil ix von dem ersten Sollwert ix*, d.h. es wird die Differenz zwischen dem ersten Sollwert ix* und dem Schlupfanteil ix betrachtet.

Es kann ein Modul 12 zur Puls-Weiten-Modulation eingesetzt werden, wie in Fig. 3 gezeigt, das mit einer Gleichspannung V= versorgt wird und die Motor-Phasenströme ia, ib moduliert. Die Gleichspannung V= kann z.B. 24V betragen. Es kann hier das erwähnte Modul 33 (Modul zur Encodersignalverarbeitung) zum Einsatz kommen, um die elektrischen Signale des Encoders 11 in einen Winkel Φm umzuwandeln. Bei einem encoderlosen Motor 10.2 kann ein anderes Modul 34 (Modul zur Generatorsignalverarbeitung) eine etwaige Umwandlung oder Vorverarbeitung des Generatorsignals e2(t) vornehmen, wie in Fig. 2 angedeutet.

Besonders wichtig ist bei allen Ausführungsformen der Erfindung die Positionsregelung, die durch ein Positionsregelmodul 21 schematisch veranschaulicht ist. Das Positionsregelmodul 21 verarbeitet, je nach Ausführungsform, ein Encodersignal (z.B. e(t)) eines Motors 10.1 oder ein Generatorsignal e2(t) eines Motors 10.2. Vorzugsweise ist ein Modul zur Encodersignalverarbeitung 33 oder ein Modul zur Generatorsignalverarbeitung 34 zwischengeschaltet, wie in den Figuren 1A, 1B, 2 und 3 gezeigt.

Das Modul zur Encodersignalverarbeitung 33 kann als Teil der Motorsteuerung 20 eingesetzt werden, um aus dem Signal e(t) des Encoders 11 eine Geschwindigkeitsaussage abzuleiten. Die Geschwindigkeitsaussage ergibt sich z.B. aus der Anzahl der Winkelinkremente, die der Encoder 11 anzeigt und der Zeit. Die Geschwindigkeitsaussage kann aber auch mittels eines zusätzlichen Encoders 32 ermittelt werden (siehe z.B. Fig. 1B). Bei der Geschwindigkeitsaussage kann es sich um eine Winkelgeschwindigkeit der Welle oder Achse 18 des Schrittmotors 10 oder um eine Lineargeschwindigkeit eines sich bewegenden mechanischen Elements (z.B. des Pumpenkolbens 202) einer Pumpe handeln. Diese Geschwindigkeitsaussage kann zusätzlich dem Schlupfregelmodul 15 und/oder einer übergeordneten Steuerung der Laborvorrichtung zugeführt werden, wie in Fig. 3 durch die Verbindung 35 dargestellt. Dieser Funktionsblock, respektive diese Verbindung 35 ist optional.

Es kommt ein optionaler Profil-Generator 19 zum Einsatz, der die zeitabhängigen Sollwerte Φm* für den Positionsregler vorgibt. Im Fall eines Geschwindigkeitsreglers anstelle des Positionsreglers 23, gibt dieser zeitabhängige Sollwerte für den Geschwindigkeitsregler vor. Der/die Sollwerte, die jeweils mit einem "*" gekennzeichnet sind, können auch von einer Anwendungssoftware oder einer Applikation (z.B. einer Laborvorrichtung, wie einem Liquid Handling Gerät) vorgegeben werden.

Bei dem Encoder 11 handelt es sich vorzugsweise um einen Inkremental-Encoder. Um so höher die Auflösung des Encoders 11 ist, um so genauer können Sollpositionen Φm* angefahren und auch gehalten werden. Um eine Genauigkeit zu erreichen, die z.B. für das hochpräzise Handhaben einer Flüssigkeitsmenge in einem Dilutor 200 geeignet ist, bei dem eine erfindungsgemässe Motorsteuerung 20 einen als Pumpenmotor dienenden (Schritt-)Motor 10.1 ansteuert, wird ein Encoder 11 eingesetzt, der eine Winkelauflösung hat, die grösser ist als 1024 Linien.

Besonders als Encoder 11 geeignet ist ein Hall-Sensor, da ein solcher Hall-Sensor berührungslos z.B. auf der rückwärtigen Seite eines Schrittmotors 10.1 platziert werden kann. In Fig. 4 ist ein schematisches Beispiel eines Schrittmotors 10.1 mit einem als Encoder 11 dienenden Hall-Sensor gezeigt. Anhand dieser Figur 4 ist auch zu erkennen, dass die Welle oder Achse 18 des Motors 10.1 (oder eines Motors 10.2) mechanisch mit einer koaxialen Drehspindel 28 verbunden sein kann. Die Drehspindel 28 kann zum Beispiel einen Kolben 202 oder ein anderes mechanisches Element einer Pumpe bewegen. In Fig. 4 ist weiterhin angedeutet, dass eine Platine 30 oder Schaltungsplatte auf der Rückseite des Motors 10.1 (oder des Motors 10.2) sitzen kann (diese Platine 30 oder Schaltungsplatte auf der Rückseite des Motors 10.1 oder 10.2 ist optional). Auf der Platine 30 oder Schaltungsplatte können ein Teil oder alle Bauelemente der Motorsteuerung 20 angeordnet sein. Die Verbindung zu einer übergeordneten Steuerung z.B. einer Laborvorrichtung kann z.B. über einen Stecker oder eine Steckverbindung 29 erfolgen. So kann die Laborvorrichtung steuerungstechnisch mit der Motorsteuerung 20 verbunden werden.

Damit das Verfahren der Erfindung angewendet werden kann, muss einmalig der mechanische Drehwinkel mit dem elektrischen Feld, das in den Motor 10 eingeprägt wird, synchronisiert werden. Dies kann mit einer initialen, gesteuerten Bewegung realisiert werden. Während der Initialisierungsbewegung wird das Encodersignal e(t) oder das Generatorsignal e2(t) eingelesen und mit einem Steuersignal P4 in Relation gebracht. Anhand der Relation kann dann die Nullposition errechnet werden.

Gemäss Erfindung kommt das folgende Verfahren beim Ansteuern des (Schritt-)Motors 10.1 oder 10.2 zum Einsatz.
1. Schritt: Messen oder Abgreifen der aktuellen Motor-Phasenströme ia, ib mittels Phasenanschlüssen 27 oder anderen Mitteln.
2. Schritt: Abbilden oder umwandeln dieser Motor-Phasenströme ia, ib in ein zweiachsiges Koordinatensystem mit den Achsen a und b, wie in Fig. 5A dargestellt. Die entsprechenden Werte iat und ibt stellen zeitvariable Werte dar, die aus den Motor-Phasenströme ia, ib abgeleitet wurden.
3. Schritt: Drehen des zweiachsigen a-b-Koordinatensystems, um es an den aktuellen Schlupf des Schrittmotors 10 anzupassen. Zum Drehen des zweiachsigen a-b-Koordinatensystems kann ein Transformationswinkel ϕ verwendet werden, der bei einer letzten Iteration der Motorsteuerung 20 gewonnen worden ist. Bei diesem 3. Schritt werden die Werte iat und ibt vektoriell in Koordinatenanteile (Vektorkomponenten) des durch Drehung neu gewonnenen x-y-Koordinatensystems zerlegt. Das neu gewonnene x-y-Koordinatensystem ist durch die Achsen x und y, wie in Fig. 5A dargestellt, definiert. Der Vektor iat im a-b-Koordinatensystem wird in eine Komponente iax auf der x-Achse und eine Komponente iay auf der y-Achse zerlegt. Der Vektor ibt im a-b-Koordinatensystem wird in eine Komponente ibx auf der x-Achse und eine Komponente iby auf der y-Achse zerlegt. In Fig. 5B ist dargestellt, dass sich der Vektor ix (= Schlupfanteil) in y-Achsrichtung zusammensetzt aus den Komponenten iay + iby. Der Vektor iy (= Drehmomentanteil) in y-Achsrichtung hingegen setzt sich aus den Komponenten iay + iby zusammen. Die entsprechenden Achsen a und b, sowie x und y stehen jeweils senkrecht zueinander und die Vektoren auf den einzelnen Achsen sind daher orthogonal zueinander, d.h. sie sind voneinander unabhängig. Dadurch kann man z.B. den Vektor ix (= Schlupfanteil) bei Bedarf z.B. auf Null zwingen, ohne Einfluss zu nehmen auf den momentanen Vektor iy (= Drehmomentanteil).
   Dieser 3. Schritt wird als Transformation oder Matrix-Transformation bezeichnet und von dem Transformationsmodul 13 durchgeführt.
4. Schritt: In diesem Schritt werden durch die Additionsglieder A3 bzw. A2 die entsprechenden Differenzen (ix* - ix bzw. iy* - iy) gebildet, wie beschrieben. Die Differenz ix* - ix kontrolliert oder regelt den Schlupfanteil und die Differenz iy* - iy kontrolliert oder regelt den Drehmomentanteil. Diese Differenzen (ix* - ix bzw. iy* - iy) werden als Eingangsgrössen den Reglern 22 bzw. 24 übergeben. Die Regler 22 und 24 erzeugen die entsprechenden Spannungsvektoren Vds und Vqs. Um die entsprechenden Spannungsvektoren Vds und Vqs bereit stellen zu können, wird hier wieder eine Transformation durchgeführt. Vorzugsweise kommt zu diesem Zweck eine sogenannte inverse Matrix-Transformation zum Einsatz, die einen Übergang der Vektoren des x-y-Koordinatensystems in ein a-b-Koordinatensystem schafft (in Umkehrung des Vorgangs der Figuren 5A und 5B). Diese inverse Matrix-Transformation wird durch einen Invertierenden Transformator 17 ausgeführt (siehe Fig. 3).
5. Schritt: Nun werden diese Schritte jeweils mit neuen Werten wiederholt. Um so höher die Wiederholungsrate ist, um so schneller arbeitet der Regelkreis der Motorsteuerung 20. Die Motorsteuerung 20 regelt den Motor 10.1 oder 10.2 quasi in Echtzeit. Kleinste Abweichungen werden anhand der erwähnten Differenzbildung erkannt und sofort ausgeregelt (minimiert).

Mittels der Motorsteuerung 20 können die Tiefpass- und Magnetfluss-Eigenschaften des (Schritt-)Motors 10.1, 10.2 kompensiert werden, um so ein drehzahlunabhängiges Drehmoment des (Schritt-)Motors 10.1, 10.2 vorgeben zu können.

Die Antriebsvorrichtung 100 kann besonders vorteilhaft eingesetzt werden in Dilutoren 200, wie z.B. in den Figuren 6 bis 10 gezeigt.

Ein entsprechender Dilutor 200 ist in Fig. 6 gezeigt. Der Dilutor 200 umfasst eine motorbetriebene Spritzenpumpe, bei der ein Motor 10 (in Fig. 6 nicht zu sehen) einen Kolben 202 einer Spritze 201 präzise in einem Zylinder 216 auf und ab bewegt. Die Auf- und Abbewegung ist durch den Doppelpfeil P6 gekennzeichnet. Auf der Spritze 201 kann z.B. ein Dreiwegeventil 203 (oder ein anderes Ventil) sitzen, das ebenfalls motorisch durch Drehen umgeschaltet wird, wie durch den Doppelpfeil P7 dargestellt. Das Ventil 203 wird vorzugsweise so geschaltet, dass ein Spritzenraum 217 und ein Vorratsgefäss 204 mit einem Reagens oder Verdünnungsmedium 203 (z.B. einem Lösemittel, Puffer oder ähnlichem) fluidisch verbunden werden. Beim Hinunterziehen oder -bewegen des Kolbens 202 wird die Spritze 201 mit Verdünnungsmedium 203 befüllt. Danach wird das Ventil 203 durch Drehen geschaltet, damit der Spritzenraum 217 mit einer Dispenserspitze 205 fluidisch verbunden sind. Mit dem motorischen Hochfahren des Kolbens 202 wird Verdünnungsmedium 203 über die Dispenserspitze 205 abgegeben. Ist der Kolben 202 ganz oben angelangt und die Spritze 201 somit leer, kann das Ventil 203 wieder in Richtung Vorratsgefäss 204 geschaltet und die Spritze 201 erneut befüllt werden. Der Doppelpfeil P8 zeigt an, dass die Dispenserspitze 205 z.B. durch einen Roboterarm (nicht gezeigt) automatisch bewegt werden kann.

Die beschriebene Auf- und Abbewegung P6 des Kolbens 202 kann durch einen Motor 10 bewerkstelligt werden, der durch eine Motorsteuerung 20 angesteuert und geregelt wird, wie beschrieben. Der Motor 10 samt Motorsteuerung 20 sitzt vorzugsweise hinter oder im Inneren des in Fig. 6 gezeigten Gehäuses 206.

In den Figuren 7 bis 10 sind mehrere Beispiel für den Aufbau eines Dilutors 200 mit (Schritt-)Motor 10 gezeigt.

In Fig. 7 ist ein Dilutor 200 mit einem rückwärtig installierten Motor 10 gezeigt, dessen Welle oder Achse als Drehspindel 28 ausgelegt ist. Die Drehspindel 28 sitzt in einem Mitnehmer oder Läufer 207. Wenn der Motor 10 die Drehspindel 28 um ihre Längsachse A dreht, dann wird der Mitnehmer oder Läufer 207 samt dem mechanisch damit verbundenen Pumpenkolben 202 bewegt. Die Auf- und Abbewegung des Kolbens 202 ist durch den Doppelpfeil P6 dargestellt. Die anderen Elemente des Dilutors 200 wurden bereits im Zusammenhang mit Fig. 6 beschrieben. Daher wird auf die Beschreibung dieser Figur verweisen.

In Fig. 8 ist ein Dilutor 200 mit einem rückwärtig installierten Motor 10 gezeigt, auf dessen Welle oder Achse 18 ein Zahnrad (hier ein Stirnrad 208) sitzt. Das Stirnrad 208 greift in eine Zahnstange 209 ein. Wenn der Motor 10 die Achse oder Welle 18 dreht, dann dreht sich auch das Stirnrad 208. Bei einer Drehung des Stirnrades 208 im Uhrzeigersinn wird die Zahnstange 209 samt des damit verbundenen Pumpenkolbens 202 nach oben bewegt. Bei einer Drehung gegen den Uhrzeigersinn, ergibt sich eine Abwärtsbewegung. Die Auf- und Abbewegung des Kolbens 202 ist durch den Doppelpfeil P6 dargestellt. Neben der gezeigten Anordnung gibt es auch andere Formen von sogenannten Zahnradantrieben 210, die in einem Dilutor 200 eingesetzt werden können.

In Fig. 9 ist ein Dilutor 200 mit einem rückwärtig installierten Motor 10 mit Zahnriemenantrieb 211 gezeigt. Auf der Welle oder Achse 18 des Motors 10 sitzt eine verzahnte Rolle oder ein verzahntes Rad 213. In einem gewissen Abstand ist eine zweite verzahnte Rolle oder ein zweites verzahntes Rad 213 angebracht. Ein Zahnriemen 212 läuft um die verzahnten Rollen oder Räder 213 um. Wenn der Motor 10 die Achse oder Welle 18 dreht, dann bewegt sich der Zahnriemen 212. M Zahnriemen 212 ist z.B. ein Mitnehmer 214 angebracht, die die Bewegung des Zahnriemens 212 auf den Pumpenkolben 202 überträgt. So ergibt sich wiederum eine Auf- und Abbewegung P6.

In den verschiedenen Beispielen der Figuren 7 bis 9 können zusätzlich auch Über- oder Untersetzungen (z.B. über Zahnriemen oder Getriebe) zum Einsatz kommen.

In Fig. 10 ist ein Dilutor 200 mit einem rückwärtig installierten Linearmotor 10 gezeigt, der einen länglichen Stator 215 umfasst. Durch geeignete Veränderung der Felder zwischen dem Linearmotor 10 und dem Stator 215 ergibt sich eine Bewegung nach oben oder unten. Dieser Bewegung kann mechanisch an den Pumpenkolben 202 übertragen werden, wie gezeigt. So ergibt sich wiederum eine Auf- und Abbewegung P6.

Eine Pumpe, die mit einer Antriebsvorrichtung 100 angetrieben wird, weist eine hohe Effizienz auf. Die hochgenaue Positionierung mittels des Positionsregelmoduls 21, das starre ungedämpfte Regelsystem und die anderen Merkmale der Erfindung ermöglichen ein hervorragendes Handhaben kleinster Flüssigkeitsmengen. Trotz dieser hohen Genauigkeit bei der Handhabung kleinster Flüssigkeitsvolumina, kann eine solche Pumpe mit grosser Geschwindigkeit und lastabhängiger Leistung betrieben werden. Die erfindungsgemässe Antriebsvorrichtung 100 kann zum Beispiel eine Pumpe mit bis zu 6000 U/min antreiben. Aufgrund dieser Eigenschaften kann eine solche Pumpe mit Antriebsvorrichtung 100 für eine Vielzahl verschiedener Laboranwendungen in den entsprechenden Laborvorrichtungen eingesetzt werden.

Aufgrund der vernachlässigbaren Wärmeentwicklung, lassen sich die Antriebsvorrichtung 100, oder die Dilutoren 200 mit den entsprechenden Antriebsvorrichtungen 100 eng nebeneinander platzieren, ohne dass es zu thermischen Problemen kommt. Insbesondere geht es um mehrkanalige Liquid Handling Geräte mit einem Dilutor 200 pro Pipettierkanal zur Aufnahme und Abgabe von Flüssigkeitsproben. Jeder Dilutor 200 umfasst in diesem Fall eine Antriebsvorrichtung 100 nach einer der Ausführungsformen.

Die Antriebsvorrichtung 100 ist aufgrund des reduzierten Stromverbrauchs besonders auch für mobile Einsatzformen und Anwendungen geeignet.

**Bezugszeichen:**

| | |
|---|---|
| (Schritt-)Motor / Synchronmotor | 10 |
| Encoder | 11 |
| Puls-Weiten Modulationsmodul | 12 |
| Transformationsmodul (Park-Transformator) | 13 |
| Signalleitungen | 14 |
| Schlupfreqelmodul | 15 |
| Drehmomentregelmodul | 16 |
| Invertierender Transformator | 17 |
| Motorwelle oder -achse | 18 |
| Profil-Generator | 19 |
| Motorsteuerung | 20 |
| Positionsreqelmodul | 21 |
| PI- oder PID-Regler | 22 |
| PI- oder PID-Reqler | 23 |
| PI- oder PID-Regler | 24 |
| Phasenanschlüsse (Shunts) | 27 |
| Drehspindel | 28 |
| Stecker oder Steckverbindung | 29 |
| Platine | 30 |
| Kommutierunqsmodul | 31 |
| Weiterer Encoder | 32 |
| Modul zur Encodersiqnalverarbeitunq | 33 |
| Modul zur Generatorsignalverarbeitung | 34 |
| Verbindung | 35 |
| | |
| Antriebsvorrichtung | 100 |
| | |
| Dilutor | 200 |
| Spritze | 201 |
| Kolben | 202 |
| Systemflüssigkeit | 203 |
| Vorratsqefäss | 204 |
| Dispenserspitze | 205 |
| Gehäuse | 206 |
| Mitnehmer / Läufer | 207 |
| Stirnrad | 208 |
| Zahnstange | 209 |
| Zahnradantrieb | 210 |
| Zahnriemenantrieb | 211 |
| Zahnriemen | 212 |
| Verzahnte Rollen oder Räder | 213 |
| Mitnehmer | 214 |
| Länglicher Stator | 215 |
| Zylinder | 216 |
| Spritzenraum | 217 |
| | |
| Längsachse | A |
| Achsen, Phasenströme | a, b |
| Additionsglieder | A1, A2, A3 |
| Achsen, Drehmoment und Schlupf | y, x |
| (Encoder-)Signal | e(t), f(t) |
| Signal, das von einem Encodersignal abgeleitet wurde | e1(t) |
| Generatorsignal | e2(t) |
| Signal, das von einem Generatorsignal abgeleitet wurde | e3(t) |
| Motor-Phasenströme | ia, ib |
| zeitvariable Werte | iat, ibt |
| Komponente | iax |
| Komponente | ibx |
| Komponente | iay |
| Komponente | iby |
| Schlupfanteil (Vektor) | ix |
| Erster Sollwert, Schlupf | ix* |
| Drehmomentanteil (Vektor) | iy |
| Zweiter Sollwert, Drehmoment | iy* |
| Transformationswinkel | ϕ |
| Pfeil | P1, P2, P3, P4, P5, P6, P7, P8, P9 |
| Ausgangssignale (Spannungsvektoren) | VAs, VBs |
| Gleichspannung | V= |
| Soll position | Φm* |
| Istposition | Φm |

## Patentansprüche

1. Verfahren zum Ansteuern eines in einer Antriebsvorrichtung (100) umfassten Motors (10.1) in einem Dilutor (200) mit den folgenden Schritten:
- Bereitstellen eines Encodersignals (e(t)), das Positionsinformation über die Rotorposition des Motors (10.1) repräsentiert,
- Abgreifen von Phasenströmen (ia, ib) des Motors (10.1),
- Vorgeben eines ersten Sollwertes (ix*) zum Regeln eines Schlupfanteils (ix),
- Vorgeben eines zweiten Sollwertes (iy*) zum Regeln eines Drehmomentanteils (iy),
- Zerlegen der aktuell fliessenden Motor-Phasenströme (ia, ib) mittels eines Transformationsverfahrens in einen Schlupfanteil (ix) und einen Drehmomentanteil (iy);
- Vorgeben der Motor-Phasenströme (ia, ib) zur Kommutierung des Motors (10.1) derart, dass die Differenz zwischen dem Schlupfanteil (ix) und dem ersten Sollwert (ix*) und die Differenz zwischen dem Drehmomentanteil (iy) und dem zweiten Sollwert (iy*) minimal sind, wobei der Schlupfanteil (ix) und der Drehmomentanteil (iy) unabhängig voneinander so geregelt werden, dass aufgrund der Kommutierung ein Statorfeld des Motors (10.1) durch die entsprechenden Phasenströme (ia, ib) aufgebaut wird,
wobei die Phasenströme (ia, ib) dynamisch so eingestellt werden, dass die Differenz zwischen dem Schlupfanteil (ix) und dem ersten Sollwert (ix*) und die Differenz zwischen dem Drehmomentanteil (iy) und dem zweiten Sollwert (iy*) minimal sind,
wobei die Phasenströme (ia, ib) lastabhängig dynamisch geregelt werden und sich proportional zu einem momentan anliegenden Drehmomentanteil (iy) verhalten,
wobei in einem Initialisierungsschritt der mechanische Drehwinkel des Motors (10.1) mit dem elektrischen Feld, das in den Motor (10.1) durch die Kommutierung eingeprägt wird, synchronisiert werden,
wobei in dem Initialisierungsschritt während einer Initialisierungsbewegung das Encodersignal (e(t)) eingelesen und mit einem Steuersignal (P4) in Relation gebracht wird, um anhand der Relation zwischen dem aktuellen Signal (e(t)) und dem Steuersignal (P4) die Nullposition zu errechnen, und
wobei, wenn keine äusseren Kräfte am Motor (10.1) anliegen, die Motor-Phasenströme (ia, ib) auf Null regelbar sind, sodass in einem statischen Fall keine oder sehr niedrige Halteströme fliessen und sich kaum Wärme am Motor bildet.

2. Verwendung des Verfahrens nach Anspruch 1, wobei der Dilutor (200) umfasst:
- eine Antriebsvorrichtung (100),
- einen Motor (10.1) mit Rotor und Stator, und
- eine Motorsteuerung (20), die dazu ausgelegt ist den Motor (10.1) anzusteuern,
wobei die Antriebsvorrichtung (100) umfasst:
- Positionserfassungsmittel (11, 21), die im Betrieb jeweils ein Encodersignal (e(t)) liefern, das die aktuelle Rotorposition des Rotors wiedergibt,
- Phasenanschlüsse (14, 27), um motorseitig die aktuell fliessenden Motor-Phasenströme (ia, ib) abzugreifen,
wobei die Motorsteuerung (20) umfasst:
- ein Transformationsmodul (13), um die aktuell fliessenden Motor-Phasenströme (ia, ib) mittels eines Transformationsverfahrens in einen Schlupfanteil (ix) und einen Drehmomentanteil (iy) zu zerlegen,
- ein Schlupfregelmodul (15), dem als Eingangsgrössen der Schlupfanteil (ix) und ein erster Sollwert (ix*) zur Verfügung gestellt werden,
- ein Drehmomentregelmodul (16), dem als Eingangsgrössen der Drehmomentanteil (iy) und ein zweiter Sollwert (iy*) zur Verfügung gestellt werden,
wobei das Schlupfregelmodul (15) und das Drehmomentregelmodul (16) die Rotor-Phasenströme (ia, ib) zur Kommutierung des Motors (10.1) so vorgeben, dass die Differenz zwischen dem Schlupfanteil (ix) und dem ersten Sollwert (ix*) und die Differenz zwischen dem Drehmomentanteil (iy) und dem zweiten Sollwert (iy*) minimal sind, wobei der Schlupfanteil (ix) und der Drehmomentanteil (iy) unabhängig voneinander so geregelt werden, dass aufgrund der Kommutierung ein Statorfeld des Motors (10.1) durch die entsprechenden Motor-Phasenströme (ia, ib) aufgebaut wird.

3. Verwendung nach Anspruch 2, **dadurch gekennzeichnet, dass** die Motorsteuerung (20) einen invertierenden Transformator (17) und einen Puls-Weiten-Modulationsmodul (12) umfasst, um Ausgangssignale (VAs, VBs) des Schlupfregelmoduls (15) und des Drehmomentregelmoduls (16) in Regelgrössen zu transformieren, die von dem Puls-Weiten-Modulationsmodul (12) in die Motor-Phasenströme (ia, ib) umgesetzt werden können.

4. Verwendung (100) nach Anspruch 2 oder 3, **dadurch gekennzeichnet, dass** das Transformationsmodul (13) einen Matrix-Transformator umfasst.

5. Verwendung nach Anspruch 4, **dadurch gekennzeichnet, dass** der Matrix-Transformator (18) mittels einer Matrix-Transformation aus Stromwerten den Schlupfanteil (ix) und den Drehmomentanteil (iy) erzeugt.

6. Verwendung nach einem der Ansprüche 2 bis 5, **dadurch gekennzeichnet, dass** die Motor-Phasenströme (ia, ib) von der Motorsteuerung (20) modulierbar sind und die aktuellen Motor-Phasenströme (ia, ib) jeweils abhängen von der Differenz zwischen dem Schlupfanteil (ix) und dem ersten Sollwert (ix*) und der Differenz zwischen dem Drehmomentanteil (iy) und dem zweiten Sollwert (iy*).

7. Verwendung nach einem der Ansprüche 2 bis 6, **dadurch gekennzeichnet, dass** durch die Motorsteuerung (20) die Motor-Phasenströme (ia, ib) auf Null regelbar sind, falls keine äusseren Kräfte am Motor (10.1) anliegen.

8. Verwendung nach einem der Ansprüche 2 bis 7, **dadurch gekennzeichnet, dass** mittels eines Positionsregelmoduls (21) anhand des Encodersignals (e(t)) eine Istposition (Φm) ermittelbar ist, und dass das Drehmoment des Motors (10.1) so einstellbar ist, dass die Differenz zwischen der Sollposition (Φm*) und der Istposition (Φm) minimal ist.

9. Verwendung nach einem der Ansprüche 2 bis 8, **dadurch gekennzeichnet, dass** mittels der Motorsteuerung (20) der Schlupfanteil (ix) und der Drehmomentanteil (iy) individuell und unabhängig voneinander regelbar sind.

10. Verwendung nach einem der Ansprüche 2 bis 9, **dadurch gekennzeichnet, dass** mittels der Motorsteuerung (20) Tiefpass- und Magnetfluss-Eigenschaften des Motors (10.1) kompensierbar sind, um so ein drehzahlunabhängiges Drehmoment des Schrittmotors (10.1) vorgeben zu können.

11. Verwendung nach einem der Ansprüche 2 bis 10, **dadurch gekennzeichnet, dass** die Motorsteuerung (20) einen integrierten Schaltkreis, vorzugsweise einen Digitalen-Signal Prozessor (DSP), umfasst, in dem mindestens einer der folgenden Regelmodule
- Schlupfregelmodul (15),
- Drehmomentregelmodul (16)
- Positionsregelmodul (21),
- Modul zur Encodersignalverarbeitung (33), oder
- Modul zur Generatorsignalverarbeitung (34)
implementiert ist.

12. Verwendung nach einem der Ansprüche 2 bis 11, **dadurch gekennzeichnet, dass** es sich bei der Motorsteuerung (20) um eine Pumpensteuerung und bei dem Motor (10.1) um einen Pumpenmotor handelt.

13. Verwendung nach einem der Ansprüche 2 bis 12, **dadurch gekennzeichnet, dass** der Rotor des Motors (10.1) mechanisch mit einem beweglichen Pumpenelement, vorzugsweise einem Pumpenkolben (202), einer Spindelwelle (28), einem Zahnrad (208), einer verzahnten Rolle oder einem verzahnten Rad (213), oder einem Stössel einer Pumpe, verbunden ist.

## Claims

1. A method of driving a motor (10.1) included in a drive device (100) in a diluter (200), comprising the steps of:
- providing an encoder signal (e(t)) representing position information about the rotor position of the motor (10.1),
- picking up phase currents (ia, ib) of the motor (10.1),
- predetermining a first target value (ix*) for controlling a slip component (ix),
- predetermining a second target value (iy*) for controlling a torque component (iy),
- decomposing the currently flowing motor phase currents (ia, ib) by means of a transformation process into a slip component (ix) and a torque component (iy);
- specifying the motor phase currents (ia, ib) for commutation of the motor (10.1) such that the difference between the slip component (ix) and the first target value (ix*) and the difference between the torque component (iy) and the second target value (iy*) are minimal, wherein the slip component (ix) and the torque component (iy) are controlled independently of each other such that due to the commutation a stator field of the motor (10.1) is established by the respective phase currents (ia, ib),
wherein the phase currents (ia, ib) are dynamically adjusted such that the difference between the slip component (ix) and the first target value (ix*) and the difference between the torque component (iy) and the second target value (iy*) are minimal,
wherein the phase currents (ia, ib) are controlled dynamically depending on the load and behave proportionally to a presently applied torque component (iy),
wherein, in an initialization step, the mechanical angle of rotation of the motor (10.1) is synchronized with the electric field impressed into the motor (10.1) due to the commutation,
wherein, in the initialization step, during an initialization movement, the encoder signal (e(t)) is read-out and transfered into relation with a control signal (P4), in order to calculate the zero position based on the relation between the current signal (e(t)) and the control signal (P4), and
wherein, if no external forces are applied to the motor (10.1), the motor phase currents (ia, ib) are adjustable to zero, such that, in a static case, no or very low holding currents are flowing, and low heat is produced on the motor.

2. The usage of the method of claim 1, wherein the diluter (200) comprises:
- a drive device (100),
- a motor (10.1) having a rotor and stator, and
- a motor controller (20) adapted to drive the motor (10.1),
wherein the drive device (100) comprises:
- position detection means (11, 21), which in operation respectively supply an encoder signal (e(t)) which represents the current rotor position of the rotor,
- phase terminals (14, 27) adapted to tap the currently flowing motor phase currents (ia, ib) on the motor side,
wherein the motor controller (20) comprises:
- a transformation module (13) for dividing the currently flowing motor phase currents (ia, ib) into a slip component (ix) and a torque component (iy) by means of a transformation method,
- a slip control module (15) to which the slip component (ix) and a first target value (ix*) are provided as input values,
- a torque control module (16) to which the torque component (iy) and a second target value (iy*) are provided as input values,
wherein the slip control module (15) and the torque control module (16) set the rotor phase currents (ia, ib) for commutation of the motor (10.1) such that the difference between the slip component (ix) and the first target value (ix*) and the difference between the torque component (iy) and the second target value (iy*) are minimal, wherein the slip component (ix) and the torque component (iy) are independently controlled such that due to the commutation a stator field of the motor (10.1) is established by means of the respective motor phase currents (ia, ib).

3. The usage according to claim 2, **characterized in that** the motor controller (20) comprises an inverting transformer (17) and a pulse-width modulation module (12) in order to transform output signals (VAs, VBs) of the slip control module (15) and the torque control module (16) into controlled variables which can be converted by the pulse-width modulation module (12) into the motor phase currents (ia, ib).

4. The usage according to claim 2 or 3, **characterized in that** the transformation module (13) comprises a matrix transformer.

5. The usage according to claim 4, **characterized in that** the matrix transformer (18) generates the slip component (ix) and the torque component (iy) by means of a matrix transformation of current values.

6. The usage according to one of claims 2 to 5, **characterized in that** the motor phase currents (ia, ib) can be modulated by means of the motor controller (20), and the current motor phase currents (ia, ib) each depend on the difference between the slip component (ix) and the first target value (ix*) and the difference between the torque component (iy) and the second target value (iy*).

7. The usage according to one of claims 2 to 6, **characterized in that** by means of the motor controller (20) the motor phase currents (ia, ib) are adjustable to zero, if no external forces are applied to the motor (10.1).

8. The usage according to one of claims 2 to 7, **characterized in that** by means of a position control module (21) an actual position (Φm) can be determined based on the encoder signal (e(t)), and that the torque of the motor (10.1) is adjustable such that the difference between the target position (Φm*) and the actual position (Φm) is minimal.

9. The usage according to one of claims 2 to 8, **characterized in that** by means of the motor controller (20) the slip component (ix) and the torque component (iy) can be controlled individually and independently.

10. The usage according to one of claims 2 to 9, **characterized in that** by means of the motor control (20) low-pass and magnetic flux properties of the motor (10.1) can be compensated such to be able to specify a torque of the stepping motor (10.1) which is independent of the rotational speed.

11. The usage according to one of claims 2 to 10, **characterized in that** the motor controller (20) comprises an integrated circuit, preferably a digital signal processor (DSP), in which at least one of the following control modules are implemented:
- a slip control module (15),
- a torque control module (16),
- a position control module (21),
- a module for encoder signal processing (33), or
- a module for generator signal processing (34).

12. The usage according to any one of claims 2 to 11, **characterized in that** the motor controller (20) is a pump control and the motor (10.1) is a pump motor.

13. The usage according to one of claims 2 to 12, **characterized in that** the rotor of the motor (10.1) is mechanically connected to a movable pump element, preferably a pump piston (202), a spindle shaft (28), a gear (208), a toothed roller or a toothed wheel (213), or a plunger of a pump.

## Revendications

1. Procédé de commande d'un moteur (10.1) compris dans un mécanisme d'entraînement (100) dans un appareil de dilution (200) comprenant les étapes suivantes consistant à :
- fournir un signal de codeur (e(t)), qui représente l'information de position sur la position de rotor du moteur (10.1),
- prélever des courants de phase (ia, ib) du moteur (10.1),
- déterminer une première valeur de consigne (ix*) pour régler une part de glissement (ix),
- déterminer une deuxième valeur de consigne (iy*) pour régler une part de couple (iy),
- décomposer les courants de phase du moteur (ia, ib) actuels à l'aide d'un procédé de transformation en une part de glissement (ix) et une part de couple (iy) ;
- déterminer les courants de phase de moteur (ia, ib) pour commuter le moteur (10.1) de sorte que la différence entre la part de glissement (ix) et la première valeur de consigne (ix*) et la différence entre la part de couple (iy) et la deuxième valeur de consigne (iy*) sont minimes, la part de glissement (ix) et la part de couple (iy) étant réglées indépendamment l'une de l'autre de sorte que, suite à la commutation, on créé un champ statorique du moteur (10.1) par les courants de phase correspondants (ia, ib),
dans lequel les courants de phase (ia, ib) sont réglés dynamiquement de telle façon que la différence entre la part de glissement (ix) et la première valeur de consigne (ix*) et la différence entre la part de couple (iy) et la deuxième valeur de consigne (iy*) sont minimes,
dans lequel les courants de phase (ia, ib) sont réglés dynamiquement en fonction de la charge et se comportent proportionnellement à une part de couple (iy) actuelle,
dans lequel, dans une étape d'initialisation, l'angle de rotation mécanique du moteur (10.1) est synchronisé avec le champ électrique qui est appliqué dans le moteur (10.1) par la commutation,
dans lequel, dans l'étape d'initialisation pendant un mouvement d'initialisation on lit le signal de codeur (e(t)) et on le met en relation avec un signal de commande (P4) pour calculer, à l'aide de la relation entre le signal actuel (e(t)) et le signal de commande (P4) le point zéro, et
dans lequel, lorsqu'il n'y a aucune force extérieure exercée sur le moteur (10.1) on peut régler les courants de phase de moteur (ia, ib) sur zéro, de sorte, dans un état statique, qu'il ne s'écoule aucun courant de maintien ou bien des courants de maintien très faibles et qu'il ne se forme que très peu de chaleur au niveau du moteur.

2. Utilisation du procédé selon la revendication 1, dans laquelle l'appareil de dilution (200) comprend :
- un mécanisme d'entraînement (100),
- un moteur (10.1) avec rotor et stator, et
- une commande de moteur (20) qui est conçue pour commander le moteur (10.1),
le mécanisme d'entraînement (100) comprenant :
- des moyens de détection de position (11, 21) qui, pendant le fonctionnement, fournissent un signal de codeur (e(t)) qui restitue la position actuelle du rotor,
- des raccordements de phase (14, 27) pour prélever côté moteur les courants de phase de moteur (ia, ib) actuels,
la commande de moteur (20) comprenant :
- un module de transformation (13) pour décomposer les courants de phase de moteur (ia, ib) actuels à l'aide d'un procédé de transformation en une part de glissement (ix) et une part de couple (iy),
- un module de réglage de glissement (15) auquel il est mis à disposition comme grandeurs d'entrée la part de glissement (ix) et une première valeur de consigne (ix*),
- un module de réglage de couple (16) auquel il est mis à disposition comme grandeurs d'entrée la part de couple (iy) et une deuxième valeur de consigne (iy*),
le module de réglage de glissement (15) et le module de réglage de couple (16) définissant les courants de phase de rotor (ia, ib) pour commuter le moteur (10.1) de telle sorte que la différence entre la part de glissement (ix) et la première valeur de consigne (ix*) et la différence entre la part de couple (iy) et la deuxième valeur de consigne (iy*) sont minimes, la part de glissement (ix) et la part de couple (iy) étant réglées indépendamment l'une de l'autre de sorte que, suite à la commutation, on créé un champ statorique du moteur (10.1) par les courants de phase de moteur correspondants (ia, ib).

3. Utilisation selon la revendication 2, **caractérisée en ce que** la commande de moteur (20) comprend un transformateur inversé (17) et un module de modulation de largeur d'impulsions (12) pour transformer les signaux de sortie (VAs, VBs) du module de réglage de glissement (15) et du module de réglage de couple (16) en grandeurs de réglage qui peuvent être transformées par le module de modulation de largeur d'impulsions (12) en courants de phase de moteur (ia, ib).

4. Utilisation selon la revendication 2 ou 3, **caractérisée en ce que** le module de transformation (13) comprend un transformateur de matrice.

5. Utilisation selon la revendication 4, **caractérisée en ce que** le transformateur de matrice (18) produit, à l'aide d'une transformation de matrice, à partir de valeurs de courant, la part de glissement (ix) et la part de couple (iy).

6. Utilisation selon l'une des revendications 2 à 5, **caractérisée en ce que** les courants de phase de moteur (ia, ib) peuvent être modulés par la commande de moteur (20) et **en ce que** les courants de phase de moteur actuels (ia, ib) dépendent toujours de la différence entre la part de glissement (ix) et la première valeur de consigne (ix*) et de la différence entre la part de couple (iy) et la deuxième valeur de consigne (iy*).

7. Utilisation selon l'une des revendications 2 à 6, **caractérisée en ce que** la commande de moteur (20) permet de régler les courants de phase de moteur (ia, ib) sur zéro si aucune force extérieure n'est appliquée sur le moteur (10.1).

8. Utilisation selon l'une des revendications 2 à 7, **caractérisée en ce que**, à l'aide d'un module de réglage de positon (21) il est possible de déterminer à l'aide du signal de codeur (e(t)) une position réelle (Φm), et **en ce que** le couple du moteur (10.1) peut être réglé de telle sorte que la différence entre la position théorique (Φm*) et la position réelle (Φm) est minime.

9. Utilisation selon l'une des revendications 2 à 8, **caractérisée en ce que**, à l'aide de la commande de moteur (20), il est possible de régler individuellement et indépendamment l'une de l'autre la part de glissement (ix) et la part de couple (iy).

10. Utilisation selon l'une des revendications 2 à 9, **caractérisée en ce que**, à l'aide de la commande de moteur (20) il est possible de compenser les propriétés passe-bas et de flux magnétique du moteur (10.1) pour pouvoir ainsi définir un couple indépendant de la vitesse de rotation du moteur pas à pas (10.1).

11. Utilisation selon l'une des revendications 2 à 10, **caractérisée en ce que** la commande de moteur (20) comprend un circuit intégré, de préférence un processeur de signal numérique (DSP) dans lequel il est intégré au moins l'un des modules de réglage suivants :
- module de réglage de glissement (15),
- module de réglage de couple (16),
- module de réglage de position (21),
- module de traitement de signal de codeur (33), ou
- module de traitement de signal de générateur (34).

12. Utilisation selon l'une des revendications 2 à 11, **caractérisée en ce que** la commande de moteur (20) est une commande de pompe et le moteur (10.1) est un moteur de pompe.

13. Utilisation selon l'une des revendications 2 à 12, **caractérisée en ce que** le rotor du moteur (10.1) est raccordé mécaniquement à un élément de pompe mobile, de préférence à un piston de pompe (202), à un arbre de broche (28), à une roue d'engrenage (208), à une roue dentée (213) ou à un poussoir de pompe.
